# FASCICULE DE BREVET EUROPEEN

(11) **EP 3 426 554 B1**
(45) Date de publication et mention de la délivrance du brevet: **22.04.2020**
(21) Numéro de dépôt: 17708540.4
(22) Date de dépôt: 07.03.2017
(51) Int. Cl.: B64C 9/36

(54) **DISPOSITIF D'ATTENUATION DE SILLAGE TOURBILLONNAIRE**
VORRICHTUNG ZUR WIRBELWALZENDÄMPFUNG
VORTEX WAKE ATTENUATION DEVICE

(30) Priorité: 10.03.2016 FR 1652008
(43) Date de publication de la demande: 16.01.2019
(73) Titulaire: Institut Supérieur de l'Aéronautique et de l'Espace, 31055 Toulouse Cedex 4 (FR)
(72) Inventeur: BURY, Yannick, 81800 Couffouleux (FR)
(74) Mandataire: Lopez, Frédérique
(86) Numéro de dépôt international: PCT/EP2017/055299
(87) Numéro de publication internationale: WO 2017/153393

(56) Documents cités:
- WO-A1-2011/002309
- WO-A1-2013/100767
- JP-A- H08 230 793
- US-A- 4 165 849
- US-A- 4 739 957
- US-A- 5 437 419
- US-A1- 2005 067 525

## Description

### Domaine de l'invention

L'invention concerne le domaine du transport aérien, et plus particulièrement propose un dispositif pour atténuer le sillage tourbillonnaire produit à l'arrière d'avions de transport présentant une forme arrière à réduction de section rapide.

### Etat de la Technique

La forme de l'arrière corps des avions de transport militaire ou à autre vocation de transport est conditionnée par leur rôle opérationnel de largage de personnels ou de matériel depuis des altitudes de vol variables. Pour répondre à ce besoin, ces avions sont équipés de portes latérales, dites portes « paratroopers » selon l'anglicisme consacré, pour le largage de parachutistes selon un cadencement modéré. Ils présentent de plus un arrière corps ayant une forte réduction de section asymétrique, vers le haut du fuselage arrière, connue sous le terme d'«upsweep » selon l'anglicisme consacré, et qui permet d'y intégrer une porte arrière et une rampe. Ces dernières peuvent être ouvertes en vol pour assurer le largage à forte cadence de parachutistes ou le largage de matériel, de tonnage potentiellement élevé.

L'upsweep est responsable d'une augmentation notable de traînée aérodynamique. Il génère également un écoulement tridimensionnel et tourbillonnaire intense dans le sillage proche de l'avion qui provoque à l'arrière de l'avion le reflux de l'écoulement vers le plan de symétrie de l'avion et vers le haut, avec une ascendance forte.

Les structures tourbillonnaires contra rotatives ainsi générées symétriquement par rapport au plan de symétrie de l'avion, qui sont intenses et qualifiées de tourbillons de sillage ou tourbillons d'upsweep, sont sources de différents problèmes lors d'opérations d'aérolargage, tels que par exemple:
- des objets largués qui peuvent entrer en contact avec la pointe arrière du fuselage ;
- des trajectoires initiales des matériels ou des personnels largués déviées ;
- un délai d'extraction de soute des matériels largués par la porte arrière impacté, dû à une perte partielle d'efficacité ;
- un délai d'ouverture des parachutes décélérateurs du matériel largué impacté, ces parachutes d'extraction de charge ayant même un risque de mise en torche ;
- une trajectoire des parachutistes largués par les portes latérales ou la porte arrière recentrée, provoquant un risque de collision entre parachutistes dans le sillage proche, connu comme phénomène de «centerlining» en anglais ;
- une ascendance initiale des matériels à faible tonnage, largués par la porte arrière, compromettant la sécurité de l'appareil.

Dans un contexte différent d'avions de transport utilisés par exemple dans la lutte contre les incendies de forêt ou contre les pollutions par hydrocarbures (ou autres polluants) en mer, les tourbillons d'upsweep tendent à disperser les produits chimiques largués sur la partie arrière de l'avion. Ces produits fortement corrosifs, viennent alors se déposer sur les éléments structuraux de l'avion, le fuselage arrière, les gouvernes entre autre, provoquant une dégradation prématurée des matériaux.

Il est connu d'utiliser, sur les avions dédiés aux missions de largage aérien (dit « aérolargage »), des dispositifs qui permettent de guider les flux d'air. Une première approche consiste à placer des déflecteurs latéraux en amont des portes latérales. Ces appendices ressemblant à de petites portes déployées lorsque le largage des parachutistes est opéré par les portes latérales ont pour vocation de limiter le fort gradient de vent subi par les parachutistes au moment de leur extraction de la carlingue de l'appareil.

Dans la demande de brevet WO 2013/100767 A1, il est proposé d'ajouter sur différentes zones du fuselage d'un avion des appendices qui peuvent être ajustés entre une position neutre de repos et une position de travail déployée afin de créer des surfaces de contrôle du fuselage en cas de décrochage ou autres perturbations, en influençant les courants d'air autour de l'aéronef.

Cependant ces déflecteurs n'atténuent pas l'intensité ni le positionnement des noyaux tourbillonnaires générés par la forme arrière du fuselage de l'appareil dans la zone d'upsweep. Aussi, l'impact des tourbillons de sillage sur les opérations d'aérolargage reste entier, que les déflecteurs de portes latérales soient déployés ou non.

Une autre approche connue consiste à placer des appendices fixes dits «strakes » d'upsweep en anglais, positionnés en pointe arrière du fuselage, à l'extrémité arrière de la zone d'upsweep. Ces appendices ont pour vocation de réduire l'impact du sillage de l'avion sur les opérations d'aérolargage. Cependant, il est reconnu que l'efficacité réelle de ces dispositifs fixes est faible. Cela résulte en particulier du fait que ces dispositifs sont positionnés loin en aval de la zone de naissance des tourbillons d'upsweep, rendant alors le contrôle de ces tourbillons d'autant moins efficace que ces derniers ont déjà acquis une intensité maximale avant même d'interagir avec les strakes d'upsweep censés les amoindrir. D'autre part, le design même de ces strakes, et leur positionnement par rapport au flux d'air local, ne peuvent pas fournir l'énergie suffisante à l'écoulement pour produire un effet suffisamment notable dans la réduction de l'intensité des tourbillons d'upsweep. Enfin, le positionnement de ces appendices peut s'avérer dangereux pour la sécurité des personnels et du matériel largué. En effet, il existe un risque de contact, voire d'accrochage, entre les parachutes d'extraction de charges lourdes et les strakes au cours des phases de sortie de soute. De même, il n'est pas exclu le risque de contact entre les parachutes à ouverture automatique des personnels largués par les portes paratroopers et les strakes. Un tel scénario peut engendrer la perte du matériel largué, avec les risques induits pour des personnes ou des biens au sol. La présence de ces appendices au design relativement tranchant en pointe arrière du fuselage peut également représenter un risque pour l'intégrité physique des personnels aérolargués en cas d'impact avec ces appendices dans leur trajectoire de saut, ou en cas de défaillance du système d'ouverture automatique de parachute, le personnel pouvant rester accroché à la ligne statique reliée à l'aéronef et subissant alors l'effet des tourbillons d'upsweep.

Les documents suivants proposent différentes approches pour atténuer le sillage tourbillonnaire :
U.S. 4,739,957 A qui présente un « Strake Fence Flap » ;
U.S. 5,437,419 A qui présente un « Rotorcraft Blade-Vortex Interaction Controller » ;
U.S. 4,165,849 A qui présente une « Combination Air Brake and Engine Shield for Aircraft » ; et
JP H08 230793 A.

Ainsi il n'existe pas de solution pour réduire de manière significative le sillage tourbillonnaire des avions présentant une forme arrière à réduction de section rapide, permettant de lever ou diminuer les problèmes résultant de l'interaction du sillage tourbillonnaire avec des charges ou des personnes aérolarguées par les portes latérales ou la porte arrière. La présente invention répond à ce besoin.

Un objet de la présente invention est de proposer un dispositif, adapté aux véhicules de transport et de largage aérien, présentant une forme arrière à réduction de section rapide, qui permet de réduire significativement l'intensité des structures tourbillonnaires se développant dans le sillage proche de ces véhicules, et d'en modifier significativement la trajectoire en les écartant par exemple du plan de symétrie longitudinal du véhicule.

Avantageusement, le dispositif de la présente invention permet d'optimiser la cadence des opérations de largage et leur précision et ainsi limiter la perte de matériel lors des opérations d'aérolargage, et garantir une meilleure sécurité des troupes ou des personnes au sol. Il permet aussi de garantir la sécurité des personnels largués.

Un autre objet de la présente invention est de proposer un dispositif adapté aux missions d'aérolargage de type largage paratroopers par les portes latérales et de type largage de charges et/ou de personnels par la porte arrière-cargo.

D'une manière générale, l'invention est basée sur le principe combiné d'une redynamisation de la couche limite et d'une interaction tourbillonnaire entre les structures tourbillonnaires produites par les flux d'air autour de l'aéronef, et des structures ou nappes tourbillonnaires volontairement générées grâce à des appendices aérodynamiques générateurs de vortex, qui sont déployables lors des opérations d'aérolargage afin d'en limiter l'impact sur la trainée aérodynamique et qui sont orientés de façon prédéterminée ou modulable par rapport au flux d'air.

Plus généralement, la présente invention trouvera une application avantageuse dans les missions de type largage et/ou récupération en vol d'escadrilles de drones, ou encore largage à haute altitude de lanceurs spatiaux, en offrant une meilleure maîtrise des conditions initiales de largage et des conditions d'écoulement à proximité de l'avion.

L'invention trouvera également une application avantageuse dans le domaine du largage de produits chimiques dédiés à la lutte contre les incendies de forêt ou à la lutte contre les pollutions par hydrocarbures (ou autres produits polluants) en mer.

Selon un mode de réalisation, il est proposé un dispositif d'atténuation du sillage tourbillonnaire créé dans la zone arrière d'un aéronef, l'aéronef présentant au moins une voilure et un arrière corps ayant une forte réduction de section asymétrique vers le haut du fuselage arrière selon la revendication 1. Le dispositif est positionné en aval de la voilure de l'aéronef, de chaque côté du fuselage de l'aéronef de manière symétrique par rapport au plan de symétrie longitudinal de l'aéronef. Il comprend au moins deux appendices aérodynamiques générateurs de vortex aptes à être déployés entre une position repliée où les appendices aérodynamiques sont repliés sensiblement dans le sens du fuselage, et une position déployée, la position déployée étant calculée pour générer des structures tourbillonnaires ayant une intensité et une trajectoire qui modifient le champ de pression local afin d'interagir avec le sillage tourbillonnaire pour l'atténuer et éloigner les tourbillons d'upsweep du plan longitudinal de l'aéronef.

Dans un mode de réalisation, le dispositif comprend des moyens hydrauliques ou électriques ou électrohydrauliques ou électromécaniques permettant de déployer les appendices aérodynamiques selon un angle donné, pouvant aller jusqu'au déploiement maximal qui positionne alors l'appendice sensiblement verticalement à la surface locale du fuselage.

Dans un mode de réalisation, chaque appendice aérodynamique en position déployée est orienté selon un angle d'incidence 'α' prédéterminé, défini par rapport aux lignes de flux locales de l'écoulement arrivant sur l'appendice aérodynamique.

Dans un mode de réalisation, l'angle d'incidence 'α' est compris entre -20° et +30°.

Dans un mode de réalisation, le dispositif comprend des moyens hydrauliques ou électriques ou électrohydrauliques ou électromécaniques permettant de faire varier l'angle d'incidence 'α' des appendices aérodynamiques en position déployée.

Dans un mode de réalisation, les appendices aérodynamiques sont de forme sensiblement en aile delta, présentant deux arêtes sensiblement perpendiculaires (b, h) dont l'une la base 'b' est placée de manière adjacente à la surface de l'aéronef et dont l'autre la hauteur 'h' est sensiblement perpendiculaire à la surface de l'aéronef quand l'appendice est en position pleinement déployée.

Dans un mode de réalisation, le rapport 'b/h' entre la base et la hauteur des deux arêtes de l'appendice aérodynamique est de l'ordre de deux. Il peut toutefois être fixé dans une gamme plus large, typiquement de l'ordre de 1 à 3, selon les contraintes d'implantation propres à l'aéronef considéré.

Dans un mode de réalisation, la hauteur 'h' d'un appendice aérodynamique est comprise dans une plage allant d'environ 50% à 120% d'une épaisseur prédéfinie 'δ' de la couche limite, sans que cela constitue une limitation.

Dans un mode de réalisation, les appendices aérodynamiques sont réalisés dans un matériau analogue à celui du fuselage de l'aéronef.

Dans un mode de réalisation, le dispositif comprend des moyens logiciels permettant de gérer le déploiement desdits au moins deux appendices aérodynamiques et l'orientation de chacun desdits au moins deux appendices.

L'invention couvre aussi un aéronef présentant un arrière corps ayant une forte réduction de section asymétrique vers le haut du fuselage arrière qui comprend au moins un dispositif d'atténuation du sillage tourbillonnaire créé dans la zone arrière de l'aéronef tel que revendiqué.

Dans un mode de réalisation, l'aéronef comprend au moins une porte latérale et au moins un dispositif positionné au voisinage et à l'amont de la porte latérale.

Dans un mode de réalisation, le dispositif comporte un premier appendice aérodynamique positionné à environ 1/3 de la hauteur du fuselage de l'aéronef et un deuxième appendice aérodynamique positionné à environ 2/3 de la hauteur du fuselage de l'aéronef. Dans une implémentation avantageuse, les appendices sont positionnés de manière symétrique de chaque côté de l'aéronef, à une distance en amont des portes latérales et selon la direction longitudinale de l'aéronef d'environ 1 à 5 fois la hauteur 'h' de l'appendice aérodynamique.

Dans un mode de réalisation où un aéronef présentant un arrière corps ayant une forte réduction de section asymétrique vers le haut du fuselage arrière, comprend au moins une porte et/ou une rampe arrière pour largage par porte et/ou rampe arrière, le dispositif d'atténuation du sillage tourbillonnaire créé dans la zone arrière de l'aéronef tel que revendiqué est positionné le long de la zone d'upsweep, de chaque côté le long de la porte et/ou de la rampe arrière, sur la partie fixe du fuselage, selon une position azimutale légèrement en amont de la ligne séparatrice de l'écoulement.

Dans un mode de réalisation, le dispositif revendiqué est composé d'une pluralité d'appendices aérodynamiques positionnés en rampe selon une direction longitudinale du fuselage.

Dans un mode de réalisation, les appendices aérodynamiques sont régulièrement espacés.

Selon la revendication 17, l'invention couvre aussi un procédé d'atténuation du sillage tourbillonnaire créé par un aéronef présentant un arrière corps ayant une forte réduction de section asymétrique vers le haut du fuselage arrière, l'aéronef comprenant un dispositif tel que revendiqué, le procédé comprenant les étapes de :
- déployer et orienter lesdits au moins deux appendices aérodynamiques du dispositif selon un angle d'incidence ayant une valeur initiale prédéfinie;
- mesurer la pression dans une zone de l'aéronef représentative de la présence de structures tourbillonnaires; et
- ajuster l'angle d'incidence des appendices aérodynamiques en fonction de la pression mesurée.

Dans un mode de réalisation, l'étape d'ajustement de l'angle d'incidence consiste à bloquer les appendices selon l'incidence pour laquelle la pression mesurée est maximisée.

Dans un mode de réalisation, l'étape de mesurer la pression consiste à mesurer la pression à l'extrados desdits appendices, et l'étape d'ajustement de l'angle d'incidence comprend les étapes de :
- faire varier l'angle d'incidence des appendices ;
- mesurer la pression à l'extrados pour une position donnée des appendices aérodynamiques ; et
- bloquer les appendices selon l'incidence pour laquelle la pression mesurée est minimisée.

L'invention couvre aussi un produit programme d'ordinateur, ledit programme d'ordinateur comprenant des instructions de code permettant d'effectuer les étapes du procédé revendiqué, lorsque ledit programme est exécuté sur un ordinateur.

L'invention couvre aussi un moyen de stockage d'informations, amovible ou non, partiellement ou totalement lisible par un ordinateur ou un microprocesseur comportant des instructions de code d'un programme d'ordinateur pour l'exécution de chacune des étapes du procédé revendiqué.

### Description des figures

Différents aspects et avantages de l'invention vont apparaitre en appui de la description d'un mode préféré d'implémentation de l'invention mais non limitatif, avec référence aux figures ci-dessous :
La figure 1 montre schématiquement un avion de transport sur lequel un dispositif de l'invention peut être implanté;
La figure 2a montre un appendice aérodynamique selon l'invention en position rétractée ;
La figure 2b illustre différentes formes d'appendices aérodynamiques selon l'invention ;
La figure 3 montre un appendice aérodynamique selon l'invention en position déployée ;
Les figures 4a et 4b montrent deux modes de réalisation du dispositif de l'invention selon une première variante d'implémentation en amont d'une porte latérale ;
La figure 5 montre un mode de réalisation du dispositif de l'invention selon une variante d'implémentation pour une porte de largage arrière ;
La figure 6 montre un enchainement d'étapes permettant d'ajuster l'incidence des appendices du dispositif de l'invention.

### Description détaillée de l'invention

D'une manière générale, le principe de l'invention consiste à contrôler la génération de nappes tourbillonnaires par la mise en place de séries d'appendices aérodynamiques dits générateurs de vortex (VGs) à des emplacements choisis sur le fuselage de l'aéronef, dans des zones du fuselage en aval de la voilure, de manière symétrique par rapport au plan de symétrie longitudinal de l'avion. Le positionnement des appendices aérodynamiques est défini de sorte à assurer à la fois une efficacité optimale pour la réduction de l'intensité des tourbillons d'upsweep, et la modification de leur trajectoire dans le sillage proche de l'avion, en les écartant par exemple du plan de symétrie longitudinal de l'avion, tout en garantissant un déploiement de ces appendices en dehors des zones potentielles d'interaction avec les personnels ou matériels largués.

De manière préférentielle, le positionnement des appendices se situe dans la zone amont de naissance des tourbillons d'upsweep. En produisant une série de structures tourbillonnaires ou vortex en amont de la zone où l'écoulement d'air se sépare naturellement du fuselage arrière de l'avion et produit des tourbillons d'upsweep, l'écoulement de flux est dans un premier temps redynamisé, retardant alors son décollement au niveau de la zone d'upsweep, puis retardant son enroulement consécutif en tourbillons d'upsweep. Les structures ou nappes tourbillonnaires volontairement produites par la série d'appendices aérodynamiques interagissent avec les tourbillons d'upsweep naturels. Cette interaction produit un cisaillement intense, responsable de la production de turbulences à petite échelle, qui permet de dissiper plus rapidement les tourbillons d'upsweep et les structures tourbillonnaires produites par les appendices et permet d'augmenter leur diffusion grâce à une augmentation de leur rayon, à une forte diminution de leur intensité et de leur vitesse de rotation.

Par ailleurs, la génération par les appendices aérodynamiques des différentes structures tourbillonnaires ou vortex induit une modification locale du champ de pression qui affecte la trajectoire des tourbillons d'upsweep. Ces tourbillons sont alors décalés sensiblement du plan de symétrie de l'avion, et donc de la zone d'opérabilité pour les missions d'aérolargage, rendant ainsi les opérations plus sûres.

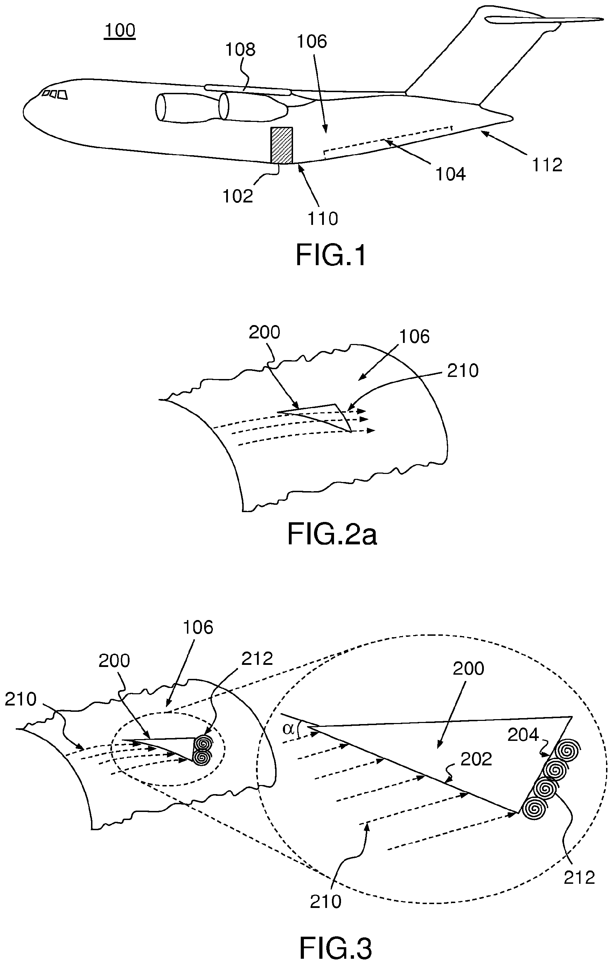

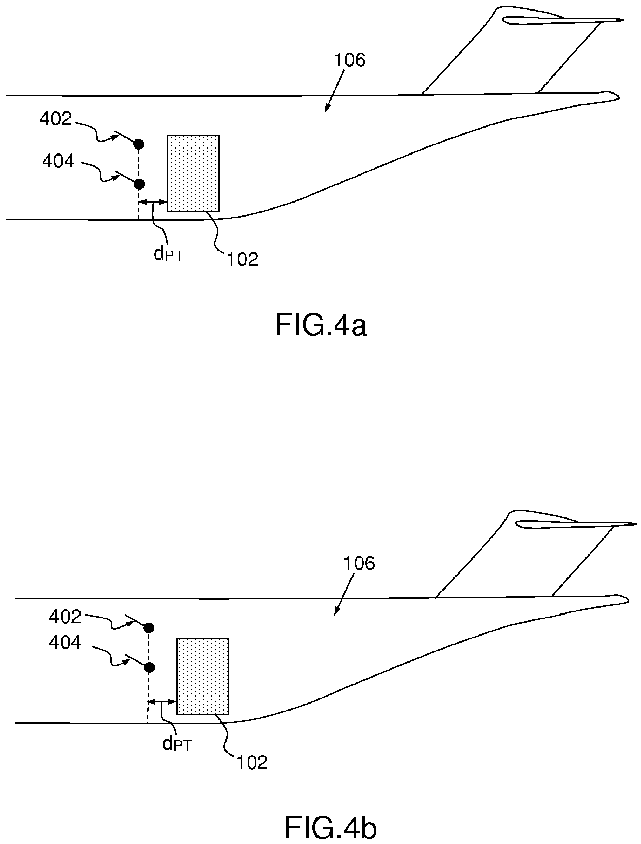

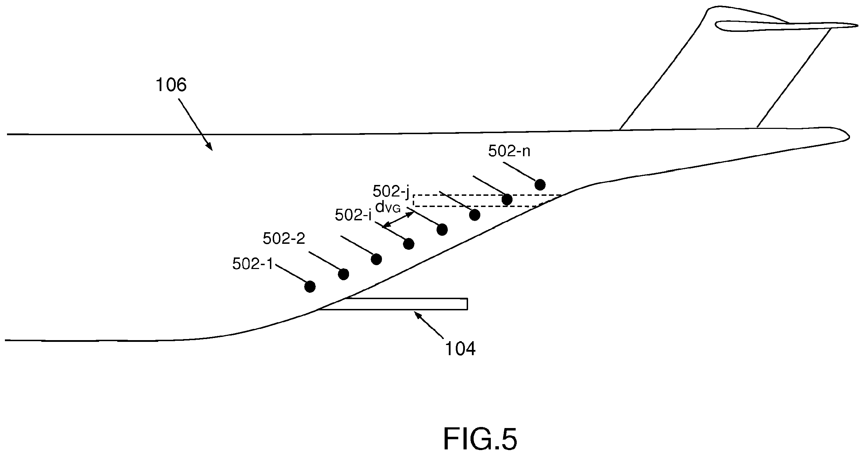

La figure 1 illustre de manière schématique un avion de transport (100) sur lequel un dispositif selon l'invention peut être implanté. Un tel type d'aéronef présente un arrière corps (106) ayant une forte réduction de section asymétrique du fuselage (110) vers le haut. Cette zone à forte réduction de section asymétrique du fuselage vers le haut est dénommée zone d'upsweep. Tel qu'il est détaillé plus loin en référence aux figures 4 et 5, des appendices aérodynamiques peuvent être disposés dans des zones du fuselage en aval de la voilure (108), au niveau des portes latérales (102) et/ou de la porte arrière (104) de manière symétrique par rapport au plan de symétrie longitudinal de l'avion. L'homme du métier comprend que pour des raisons de simplification, la figure 1 illustre une vue de côté de l'avion, mais celui-ci peut présenter une autre porte latérale symétrique où peuvent aussi être implantés des appendices aérodynamiques. De la même manière, les appendices arrières sont positionnés de manière symétrique de part et d'autre du fuselage. De manière préférentielle sans constituer de limitation, les appendices aérodynamiques sont réalisés dans un matériau analogue à celui constitutif du fuselage de l'aéronef ou dans tout matériau compatible avec les règles de l'art de la conception avion, à même de supporter les contraintes mécaniques induites par les flux d'air, en garantissant la rigidité du dispositif.

Avantageusement, les appendices aérodynamiques sont déployables à la demande. Dans une première position rétractée, les appendices sont repliés sensiblement dans le sens du fuselage. Ils peuvent être amenés dans une deuxième position déployée, où ils sont déployés sensiblement verticalement par rapport à la surface du fuselage. Dans une phase de vol initiale, les appendices sont de préférence en position repliée, puis déployés pendant la durée des opérations d'aérolargage. Les appendices peuvent être de nouveau rétractés après la fin du largage, permettant ainsi de contrôler la consommation de carburant ou le bruit émis pendant toute la durée du vol.

La figure 2a illustre un appendice aérodynamique (200) en mode rétracté positionné sur le fuselage (106) d'un avion. Dans ce mode, les appendices sont noyés dans la surface du fuselage, ne faisant pas obstacle à l'écoulement existant, tel qu'illustré par les lignes de flux locales d'écoulement d'air (210) sur la figure 2a. Dans un mode de réalisation préférentiel, les appendices aérodynamiques (200) sont en forme d'aile delta, présentant deux arêtes sensiblement perpendiculaires (b, h) dont l'une, la base 'b' est placée de manière adjacente à la surface de l'aéronef et dont l'autre, la hauteur 'h' est sensiblement perpendiculaire à la surface de l'aéronef quand l'appendice est en position pleinement déployée. Cette arête de hauteur 'h' peut présenter un angle plus faible que celui perpendiculaire à la surface de l'aéronef lorsque l'appendice n'est pas pleinement déployé.

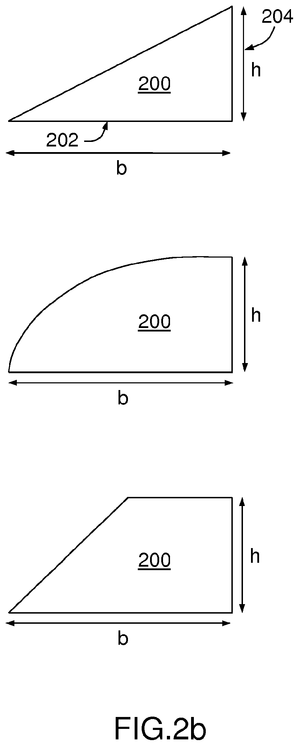

L'homme du métier pourra adapter sans nuire à leur efficacité la forme et les dimensions de ces appendices en fonction des contraintes existantes pour leur intégration sur chaque type d'avion. A titre de variantes, quelques formes d'appendices aérodynamiques adaptés au dispositif d'atténuation tourbillonnaire de l'invention sont illustrées en figure 2b.

La figure 3 montre un appendice aérodynamique 'VG' (200) en position déployée sur le fuselage (106) d'un avion, selon un mode de réalisation. Le déploiement d'un appendice aérodynamique fait obstacle aux lignes de flux locales de l'écoulement d'air (210) et il se crée derrière un appendice aérodynamique déployé des structures tourbillonnaires ou vortex (212) dont l'intensité et la trajectoire sont contrôlées par la forme, le positionnement sur le fuselage, le degré de déploiement et le calage en incidence des appendices aérodynamiques.

En reprenant la forme en aile delta montrée en figure 2a, l'appendice aérodynamique (200) présente de manière préférentielle un rapport 'b/h' de l'ordre de '2' entre sa base 'b' (202) et sa hauteur 'h' (204).

Avantageusement, l'épaisseur des appendices aérodynamiques VGs n'est pas critique pour l'efficacité du dispositif de l'invention, et elle peut être fixée selon des règles de dimensionnement associées à la tenue mécanique de ces appendices soumis au vent, dans des conditions de vol relatives à leur déploiement.

La hauteur 'h' d'un appendice aérodynamique est préférablement déterminée relativement à l'épaisseur 'δ' de la couche limite locale dans la zone d'implantation, et fixée à quelques dizaines de pourcent de cette épaisseur. Il est bien connu de l'homme de l'art que la couche limite est définie comme la zone d'interface entre un corps et un fluide environnant lors d'un mouvement relatif entre les deux, et comme étant la zone où la vitesse d'écoulement est ralentie par la paroi. Elle commence au contact de la surface où la vitesse d'écoulement est pratiquement nulle et s'étend jusqu'à une distance où la vitesse d'écoulement est sensiblement égale à celle du flux libre, distance donnant l'épaisseur 'δ' de la couche limite.

Selon des variantes d'implémentation, la hauteur 'h' d'un appendice aérodynamique VG peut être comprise dans une plage allant d'environ 50% à 120% de l'épaisseur 'δ' de la couche limite.

Bien que non illustré, le déploiement d'un appendice se fait par des moyens courants permettant d'assurer la robustesse du mécanisme, en utilisant par exemple des vérins hydrauliques ou électro-hydrauliques, de type similaires à ceux mis en œuvre par exemple pour le déploiement de déflecteurs latéraux embarqués sur des avions tels qu'un Airbus A400M ou un Boeing C17, mais en ayant un dimensionnement et une puissance adaptés à la surface alaire de chacun des appendices, qui est bien inférieure à celle de déflecteurs latéraux.

De manière préférentielle, pour des raisons de maintenance, mais aussi de minimisation des câbles et tuyaux de raccord aux servitudes hydrauliques et électriques (câbles, etc.) pour alimenter les dispositifs, les appendices aérodynamiques VGs sont implantés dans des zones du fuselage en aval de la voilure où les servitudes hydrauliques et/ou électriques, nécessaires au déploiement des appendices sont facilement accessibles, le tout permettant par ailleurs un gain de poids.

Les appendices déployés peuvent être relevés jusqu'à une ouverture d'environ 90° par rapport à la surface locale du fuselage.

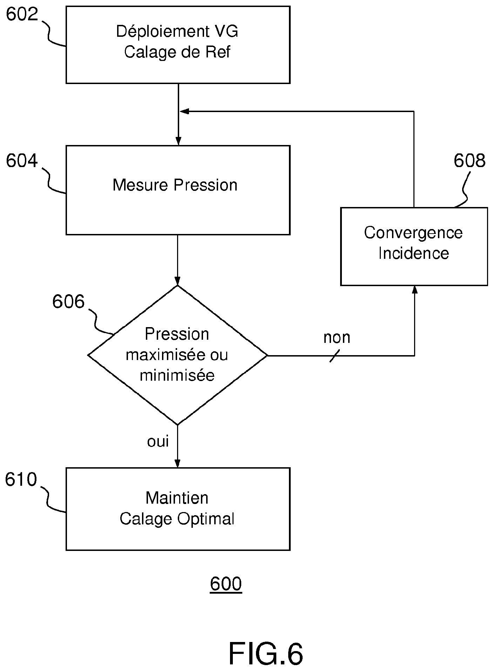

Avantageusement, les appendices sont orientables. L'incidence 'α' par rapport aux lignes de flux locales de l'écoulement d'air, initialement définie à une valeur nominale associée à une mission donnée, peut être réglable pour chaque appendice. L'angle d'incidence peut être ajusté via un dispositif de rotation (non illustré) hydraulique, électrique, électrohydraulique ou encore électromécanique autour de l'axe du vérin utilisé pour le déploiement de l'appendice, et commandé à la demande par le personnel de bord, depuis une interface de commande, ou de manière automatique par un automate fonctionnant en boucle fermée tel que représenté ultérieurement en référence à la figure 6.

Le positionnement exact et le calage en incidence de chacun des appendices peuvent être affinés en fonction des lignes de flux locales de l'écoulement, en fonction du type d'avion considéré en configuration de mission. Il est à noter que les lignes de flux locales sont préalablement déterminées au cours du développement de l'avion, par le biais de simulations numériques, d'essais en soufflerie ou d'essais en vol.

Avantageusement, la plage de variation de l'incidence locale peut être comprise entre 'α=-20°' et α=+30°' selon la zone d'implantation et la mission visée.

Les figures 4a et 4b montrent deux modes de réalisation du dispositif de l'invention particulièrement adaptées pour le largage paratrooper par porte latérale. Dans cette configuration, désignée dans la présente description comme configuration « TwinVG », le dispositif est composé d'une paire d'appendices aérodynamiques (402, 404) positionnés sur le fuselage (106), en amont de la porte latérale (102), pour chaque porte latérale de l'avion. Le couplage créé entre les deux appendices aérodynamiques, de par leur géométrie et leur positionnement, produit des nappes tourbillonnaires contrôlées qui vont interagir avec les tourbillons d'upsweep pour en atténuer l'intensité et en modifier la trajectoire.

De manière préférentielle comme illustré sur la figure 4a, les deux appendices générateurs de vortex (VGs) sont positionnés à environ 1/3 de la hauteur du fuselage pour le premier appendice (402) et à environ 2/3 de la hauteur du fuselage pour le second appendice (404), cela de chaque côté du fuselage symétriquement. Toutefois, comme illustré sur la figure 4b, le positionnement vertical peut être légèrement adapté en fonction des contraintes d'implantation selon le type d'avion, sans pénaliser l'efficacité du dispositif.

Dans un mode de réalisation, l'espacement vertical entre les deux appendices aérodynamiques d'une paire, est calculé pour être de l'ordre de deux fois la hauteur 'h' de l'appendice VG. Toutefois, des variantes avec une marge de tolérance raisonnable sont applicables à cette valeur.

Les appendices aérodynamiques sont dans un mode de réalisation préférentiel, implantés à une distance 'd_{PT}' de la porte latérale, distance définie comme étant de l'ordre de 1 à 5 fois la hauteur 'h' des appendices.

La figure 5 illustre un mode de réalisation du dispositif de l'invention particulièrement adapté pour le largage par porte et/ou rampe arrière (104). Dans cette configuration, désignée dans la présente description comme configuration « VGramp», le dispositif est composé d'une pluralité d'appendices aérodynamiques (502-1 à 502-n) positionnés en rampe selon une direction longitudinale du fuselage (106) et régulièrement espacés les uns des autres. Dans un mode de réalisation préférentiel, la distance 'd_{VG}' entre deux appendices aérodynamiques VGs est choisie comme égale à environ deux fois la hauteur 'h' de l'appendice. Toutefois, des variantes avec une marge de tolérance raisonnable sont applicables à cette valeur.

La pluralité d'appendices aérodynamiques VGs est située tout au long de la zone d'upsweep, symétriquement de part et d'autre du fuselage, le long de la porte et/ou de la rampe arrière, sur la partie fixe du fuselage, selon une position azimutale sur le fuselage, légèrement en amont de la ligne séparatrice de l'écoulement. La ligne séparatrice et les lignes de flux locales dans la zone d'implantation des rampes d'appendices aérodynamiques ont été préalablement déterminées au cours du développement de l'avion, par le biais de simulations numériques, d'essais en soufflerie ou d'essais en vol.

Avantageusement, chaque appendice étant déployable à la demande, le calage en incidence 'α' de chaque appendice peut être adapté relativement aux lignes de flux locales. De manière préférentielle, le réglable de l'angle d'incidence se situe entre 'α=-20°' et 'α=+30°', la valeur dépendant de la zone d'implantation et de la mission d'aérolargage visée.

De manière avantageuse, le calage adaptatif en incidence de chacun des appendices peut être géré par des moyens logiciels sous la forme d'un algorithme prenant en compte des mesures de pression en temps réel, sur des points distribués dans la zone de pointe arrière du fuselage (112), et répartis symétriquement de part et d'autre du plan de symétrie de l'avion.

Le procédé (600) de calage de l'incidence est décrit à la figure 6. Le procédé débute (602) par l'activation du déploiement d'un appendice aérodynamique VG et son calage en incidence selon une valeur de référence initiale (602). La valeur en incidence initiale est une valeur prédéfinie avant les opérations de largage et dépendant de la mission d'aérolargage et du type d'aéronef.

Puis le procédé permet (604) de récupérer des valeurs de pression mesurées en temps réel dans la zone de pointe arrière du fuselage (112). L'homme du métier comprend que les mesures de pression peuvent être réalisées par des composants connus de type capteurs de pression. Il est à noter que le procédé est décrit pour permettre le calage en incidence d'un seul appendice aérodynamique mais qu'il est applicable pour tout ou partie des appendices implémentés. Par ailleurs, le calage peut avoir une même valeur pour l'ensemble des appendices ou être fixé à des valeurs différentes.

Dans une étape suivante, le procédé cherche à maximiser la pression mesurée dans la zone de pointe arrière du fuselage (112), en bout d'upsweep en variant le calage en incidence des différents appendices (606). Le procédé entre dans un processus de convergence (608) qui permet de faire varier l'incidence de l'appendice VG jusqu'à atteindre la valeur maximisée de pression. Quand un maximum local de pression est obtenu en faisant varier le calage en incidence des différents VGs, le calage en incidence est considéré optimal et l'appendice VG est maintenu sur ce calage (610).

Dans un mode de réalisation, l'étape de convergence (608) vers le calage optimal de chacun des appendices consiste à faire varier l'incidence autour de la valeur de calage de référence, dans une plage de variation prédéfinie au cours d'un étalonnage initial obtenu par simulations, en soufflerie ou au cours des essais de certification.

Dans un mode alternatif, l'étape de mesure de la pression (606) consiste à mesurer la pression à l'extrados de chacun des appendices VGs et l'étape de convergence (608) consiste à faire varier l'incidence pour minimiser la pression d'extrados de l'appendice, et bloquer l'appendice dans l'orientation selon l'incidence donnant la valeur de pression minimisée.

Avantageusement, la capacité à adapter de manière robuste le calage en incidence des différents appendices aérodynamiques garantit au dispositif de l'invention une efficacité maximale malgré de possibles variations des conditions de largage, telles que la vitesse de l'avion, la dissymétrie du vent par rapport à l'avion, l'ouverture plus ou moins grande de la rampe et de la porte arrière, par exemple ou des conditions de mission, qui imposent des vitesses de largage données en fonction de l'aéronef, de l'altitude de vol, du type de matériel largué (tonnage, cadence de largage, etc.), mais aussi des conditions fortuites liées à la météo, au théâtre d'opération non forcément sécurisé (largage non nécessairement possible dans l'axe du vent dominant), etc.

## Revendications

1. Dispositif d'atténuation du sillage tourbillonnaire créé dans la zone arrière d'un aéronef (100) l'aéronef présentant au moins une voilure (108) et un arrière corps ayant une forte réduction de section asymétrique vers le haut du fuselage arrière désigné « upsweep », le dispositif étant apte à être positionné en aval de la voilure (108) de l'aéronef de manière symétrique par rapport au plan longitudinal de l'aéronef (100), le dispositif comprenant au moins deux appendices aérodynamiques (200) générateurs de vortex aptes à être déployés entre une position repliée où les appendices aérodynamiques sont repliés sensiblement dans le sens du fuselage, et une position déployée, le dispositif étant **caractérisé en ce qu'**il comprend des moyens pour :
déployer et orienter lesdits au moins deux appendices aérodynamiques selon un angle d'incidence 'α' ayant une valeur initiale prédéfinie;
mesurer la pression dans une zone de l'aéronef représentative de la présence de structures tourbillonnaires; et
ajuster l'angle d'incidence desdits au moins deux appendices aérodynamiques en fonction de la pression mesurée ; la position déployée ajustée permettant de générer des structures tourbillonnaires ayant une intensité et une trajectoire qui modifient le champ de pression local afin d'interagir avec le sillage tourbillonnaire pour l'atténuer et éloigner les tourbillons d'upsweep du plan longitudinal de l'aéronef.

2. Dispositif selon la revendication 1 dans lequel chaque appendice aérodynamique en position déployée est orienté selon un angle d'incidence 'α' dont la valeur initiale est définie par rapport aux lignes de flux locales (210) de l'écoulement arrivant sur l'appendice aérodynamique.

3. Dispositif selon la revendication 2 dans lequel l'angle d'incidence 'α' est compris entre -20° et +30°.

4. Dispositif selon la revendication 2 ou 3 comprenant des moyens hydrauliques ou électriques ou électrohydrauliques ou électromécaniques permettant de faire varier l'angle d'incidence 'α' des appendices aérodynamiques en position déployée.

5. Dispositif selon l'une quelconque des revendications 1 à 4 comprenant des moyens hydrauliques ou électriques ou électrohydrauliques ou électromécaniques permettant de faire passer les appendices aérodynamiques d'une position à une autre position.

6. Dispositif selon l'une quelconque des revendications 1 à 5 dans lequel les appendices aérodynamiques sont de forme sensiblement en aile delta, présentant deux arêtes (202, 204) sensiblement perpendiculaires (b, h) dont l'une constituant la base 'b' est placée de manière adjacente à la surface de l'aéronef et dont l'autre constituant la hauteur 'h' est perpendiculaire à la surface de l'aéronef quand l'appendice est en position pleinement déployée.

7. Dispositif selon la revendication 6 dans lequel le rapport 'b/h' entre la base et la hauteur des deux arêtes (202, 204) de l'appendice aérodynamique est de l'ordre de deux.

8. Dispositif selon la revendication 6 ou 7 dans lequel la hauteur 'h' d'un appendice aérodynamique est comprise dans une plage allant d'environ 50% à 120% d'une épaisseur prédéfinie 'δ' de la couche limite.

9. Dispositif selon l'une quelconque des revendications 1 à 8 dans lequel les appendices aérodynamiques sont réalisés dans un matériau analogue à celui du fuselage de l'aéronef.

10. Dispositif selon l'une quelconque des revendications 1 à 9 comprenant de plus des moyens de contrôle du déploiement desdits au moins deux appendices aérodynamiques et de l'orientation de chacun desdits au moins deux appendices.

11. Aéronef (100) avec voilure (108) présentant un arrière corps (106) ayant une réduction de section asymétrique du fuselage arrière (110), l'aéronef comprenant au moins un dispositif selon l'une quelconque des revendications 1 à 10 positionné en aval de la voilure de l'aéronef de manière symétrique par rapport au plan longitudinal de l'aéronef.

12. Aéronef selon la revendication 11 comprenant au moins une porte latérale (102) et au moins un dispositif (402, 404) positionné au voisinage et à l'amont de la porte latérale.

13. Aéronef selon la revendication 11 ou 12 dans lequel ledit au moins un dispositif comporte un premier appendice aérodynamique positionné à environ 1/3 de la hauteur du fuselage et un deuxième appendice aérodynamique positionné à environ 2/3 de la hauteur du fuselage.

14. Aéronef (100) avec voilure (108) présentant un arrière corps (106) ayant une réduction de section asymétrique vers le haut du fuselage arrière (110) et comprenant au moins une porte et/ou rampe arrière (104) pour largage par porte et/ou rampe arrière, l'aéronef comprenant au moins un dispositif selon l'une quelconque des revendications 1 à 10, ledit au moins un dispositif étant positionné sur le fuselage arrière le long de l'arrière corps, de chaque côté de l'aéronef le long de la porte et/ou de la rampe arrière, sur la partie fixe du fuselage, selon une position azimutale légèrement en amont de la ligne séparatrice de l'écoulement.

15. Aéronef selon la revendication 14 dans lequel ledit au moins un dispositif est composé d'une pluralité d'appendices aérodynamiques (502-i) sensiblement alignés selon une direction longitudinale du fuselage.

16. Aéronef selon la revendication 15 dans lequel les appendices aérodynamiques sont régulièrement espacés.

17. Procédé d'atténuation du sillage tourbillonnaire créé par un aéronef avec voilure et présentant un arrière corps ayant une réduction de section asymétrique vers le haut du fuselage arrière, l'aéronef comprenant un dispositif d'atténuation du sillage tourbillonnaire selon l'une quelconque des revendications 1 à 10, le procédé comprenant les étapes de :
déployer et orienter (602) lesdits au moins deux appendices aérodynamiques du dispositif selon un angle d'incidence ayant une valeur initiale prédéfinie;
mesurer (604) la pression dans une zone de l'aéronef représentative de la présence de structures tourbillonnaires; et
ajuster (610) l'angle d'incidence des appendices aérodynamiques en fonction de la pression mesurée.

18. Procédé selon la revendication 17 dans lequel l'étape d'ajustement de l'angle d'incidence consiste à bloquer les appendices aérodynamiques selon l'incidence pour laquelle la pression mesurée est maximisée.

19. Procédé selon la revendication 17 dans lequel l'étape de mesurer la pression consiste à mesurer la pression à l'extrados desdits appendices, et l'étape d'ajustement de l'angle d'incidence comprend les étapes (606, 608) de :
faire varier l'angle d'incidence des appendices aérodynamiques ;
mesurer la pression à l'extrados des appendices aérodynamiques pour une position donnée des appendices aérodynamiques ; et
bloquer les appendices aérodynamiques selon l'incidence pour laquelle la pression mesurée est minimisée.

20. Produit programme d'ordinateur, ledit programme d'ordinateur comprenant des instructions de code permettant d'effectuer les étapes du procédé selon l'une quelconque des revendications 17 à 19, lorsque ledit programme est exécuté sur un ordinateur.

21. Moyen de stockage d'informations, amovible ou non, partiellement ou totalement lisible par un ordinateur ou un microprocesseur comportant des instructions de code d'un programme d'ordinateur pour l'exécution de chacune des étapes du procédé selon l'une quelconque des revendications 17 à 19.

## Patentansprüche

1. Vorrichtung zur Dämpfung der im hinteren Bereich eines Luftfahrzeugs erzeugten Wirbelschleppe (100), wobei das Luftfahrzeug mindestens eine Tragfläche (108) und einem Hinterteil mit einer stark asymmetrischen Abnahme des Querschnitts in Richtung des oberen hinteren Rumpfes, die als "upsweep" bezeichnet ist, wobei die Vorrichtung dazu geeignet ist, in Bezug auf die Längsebene des Luftfahrzeugs (100) stromabwärts von der Tragfläche (108) des Luftfahrzeugs symmetrisch positioniert zu werden, wobei die Vorrichtung mindestens zwei Wirbel erzeugende aerodynamische Anhängsel (200) umfasst, die zum Ausfahren zwischen einer eingefahrenen Stellung, in der die aerodynamischen Anhängsel im Wesentlichen in Richtung des Rumpfes eingezogen sind, und einer ausgefahrenen Stellung geeignet sind, wobei die Vorrichtung **dadurch gekennzeichnet ist, dass** sie Mittel zur Ausführung folgender Funktionen umfasst:
Ausfahren und Ausrichten der mindestens zwei aerodynamischen Anhängsel in einem Einfallswinkel α mit einem vorgegebenen Ausgangswert;
Messen des Drucks in einem Bereich des Luftfahrzeugs, das für das Vorhandensein von Wirbel erzeugenden Strukturen repräsentativ ist, und
Verstellen des Einfallwinkels der mindestens zwei aerodynamischen Anhängsel in Abhängigkeit des gemessenen Drucks, wobei die ausgefahrene verstellte Stellung die Erzeugung von Wirbelstrukturen mit einer Intensität und Flugbahn ermöglicht, die das lokale Druckfeld modifizieren, um mit der Wirbelschleppe in Wechselwirkung zu treten, um sie zu dämpfen und um die Wirbelschleppen von der Längsebene des Luftfahrzeugs zu entfernen.

2. Vorrichtung nach Anspruch 1, wobei jedes aerodynamische Anhängsel in ausgefahrener Stellung in einem Einfallswinkel α orientiert ist, dessen Ausgangswert in Bezug auf die lokalen Strömungslinien (210) der Strömung, die auf das aerodynamische Anhängsel einwirken, definiert wird.

3. Vorrichtung nach Anspruch 2, wobei der Einfallswinkel α zwischen -20 ° und +30 ° liegt.

4. Vorrichtung nach Anspruch 2 oder 3, umfassend hydraulische oder elektrische oder elektrohydraulische oder elektromechanische Mittel, die es ermöglichen, den Einfallswinkel α der aerodynamischen Anhängsel in ausgefahrener Stellung zu variieren.

5. Vorrichtung nach einem der Ansprüche 1 bis 4, umfassend hydraulische oder elektrische oder elektrohydraulische oder elektromechanische Mittel, die es ermöglichen, die aerodynamischen Anhängsel von einer Stellung in eine andere zu versetzen.

6. Vorrichtung nach einem der Ansprüche 1 bis 5, wobei die aerodynamischen Anhängsel im Wesentlichen deltaflügelförmig sind und zwei im Wesentlichen rechtwinklig zueinander (b, h) angeordnete Kanten (202, 204), von denen eine, die die Basis b darstellt, an die Oberfläche des Luftfahrzeugs angrenzend angeordnet ist, und die andere, die die Höhe h darstellt, in einem rechten Winkel zur Oberfläche des Luftfahrzeugs steht, wenn sich das Anhängsel in voll ausgefahrener Stellung befindet.

7. Vorrichtung nach Anspruch 6, wobei das Verhältnis b/h zwischen Basis und Höhe der beiden Kanten (202, 204) des aerodynamischen Anhängsels in der Größenordnung von zwei liegt.

8. Vorrichtung nach Anspruch 6 oder 7, wobei die Höhe 'h' eines aerodynamischen Anhängsels in einem Bereich von etwa 50 - 120 % einer vorgegebenen Dicke δ der Grenzschicht liegt.

9. Vorrichtung nach einem der Ansprüche 1 bis 8, wobei die aerodynamischen Anhnängsel aus einem Material bestehen, die analog dem des Rumpfes des Luftfahrzeugs ist.

10. Vorrichtung nach einem der Ansprüche 1 bis 9, ferner umfassend Mittel zur Steuerung des Ausfahrens der mindestens zwei aerodynamischen Anhängsel und der Orientierung jedes der mindestens zwei Anhängsel.

11. Luftfahrzeug (100) mit einer Tragfläche (108) mit einem Hinterteil (106), das eine asymmetrische Abnahme des Querschnitts des hinteren Rumpfes (110) aufweist, wobei das Luftfahrzeug mindestens eine Vorrichtung nach einem der Ansprüche 1 bis 10 aufweist, die in Bezug auf die Längsebene des Luftfahrzeugs symmetrisch stromabwärts von der Tragfläche des Luftfahrzeugs angeordnet ist.

12. Luftfahrzeug nach Anspruch 11, umfassend mindestens eine Seitentür (102) und mindestens eine Vorrichtung (402, 404), die stromaufwärts von der Seitentür und in deren Nähe positioniert ist.

13. Luftfahrzeug nach Anspruch 11 oder 12, wobei die mindestens eine Vorrichtung ein erstes aerodynamisches Anhängsel, das in etwa 1/3 der Höhe des Rumpfes angeordnet ist, und ein zweites aerodynamisches Anhängsel, das in etwa 2/3 der Höhe des Rumpfes angeordnet ist, umfasst.

14. Luftfahrzeug (100) mit einer Tragfläche (108), die ein Hinterteil (106) aufweist, dessen Querschnitt in Richtung des oberen hinteren Rumpfes (110) asymmetrisch abnimmt, und mindestens eine Hintertür und/oder - rampe (104), um Gegenstände durch die Hintertür und/oder -rampe abwerfen zu können, wobei das Lutfahrzeug mindestens eine Vorrichtung nach einem der Ansprüche 1 bis 10 umfasst, wobei die mindestens eine Vorrichtung am hinteren Rumpf entlang des Hinterteils, beiderseits des Luftfahrzeugs entlang der Hintertür und/oder -rampe, auf dem ortsfesten Teil des Rumpfes, in einer Azimutstellung, die leicht stromaufwärts von der Strömungstrennlinie liegt, angeordnet ist.

15. Luftfahrzeug nach Anspruch 14, wobei die mindestens eine Vorrichtung aus einer Mehrzahl aerodynamischer Anhängsel (502-i) besteht, die im Wesentlichen in Längsrichtung des Rumpfes ausgerichtet sind.

16. Luftfahrzeug nach Anspruch 15, wobei die aerodynamischen Anhängsel regelmäßig voneinander beabstandet sind.

17. Verfahren zur Dämpfung der Wirbelschleppe, die von einem Luftfahrzeug mit Tragfläche und einem Hinterteil mit einer in Richtung des oberen hinteren Rumpfes asymmetrisch abnehmenden Querschnitt erzeugt wird, wobei das Luftfahrzeug eine Vorrichtung zur Wirbelschleppendämpfung nach einem der Ansprüche 1 bis 10 umfasst, wobei das Verfahren die Schritte umfasst:
Ausfahren und Ausrichten (602) der mindestens zwei aerodynamischen Anhängsel der Vorrichtung in einem Einfallswinkel mit einem vorgegebenen Ausgangswert;
Messen (604) des Drucks im Bereich des Luftfahrzeugs, das für das Vorhandensein von Wirbel erzeugenden Strukturen repräsentativ ist, und
Verstellen (610) des Einfallwinkels der aerodynamischen Anhängsel in Abhängigkeit des gemessenen Drucks.

18. Verfahren nach Anspruch 17, wobei das Verstellen des Einfallswinkels darin besteht, die aerodynamischen Anhängsel gemäß dem Einfall, in dem der gemessene Druck maximiert ist, zu blockieren.

19. Verfahren nach Anspruch 17, wobei das Messen des Drucks darin besteht, den Druck auf der Oberseite der Anhängsel zu messen, und das Verstellen des Einfallswinkels die Schritte (606, 608) umfasst:
Variieren des Einfallswinkels der aerodynamischen Anhängsel;
Messen des Drucks auf der Oberseite der aerodynamischen Anhängsel für eine bestimmte Stellung der aerodynamischen Anhängsel und
Blockieren der aerodynamischen Anhängsel gemäß dem Einfall, in dem der gemessene Druck minimiert ist.

20. Computerprogrammprodukt, wobei das Computerprogramm Code-Befehle umfasst, die bei Ausführung des Programms auf einem Computer die Ausführung der Schritte des Verfahrens nach einem der Ansprüche 17 bis 19 ermöglichen.

21. Informationsspeichermedium, das entfernbar oder nicht-entfernbar ist, das vollständig oder zum Teil von einem Computer oder Mikroprozessor abgelesen werden kann und Computerprogrammbefehle zur Ausführung jedes der Schritte des Verfahrens nach einem der Ansprüche 17 bis 19 umfasst.

## Claims

1. A device for attenuating the vortex wake created in the zone behind an aircraft (100), the aircraft having at least one wing (108) and an afterbody having a strong asymmetrical reduction of section upwards of the rear fuselage, referred to as <<upsweep>>, the device being capable to be positioned downstream of the wing (108) of the aircraft symmetrically relative to the longitudinal plane of the aircraft (100), the device comprising at least two vortex-generating aerodynamic appendages (200) capable of being deployed between a folded-down position in which the aerodynamic appendages are folded down substantially in the direction of the fuselage, and a deployed position, the device being **characterized in that** it comprises means for:
deploying and orienting said at least two aerodynamic appendages according to an angle of incidence "α " having a predefined initial value;
measuring the pressure in a zone of the aircraft representative of the presence of vortex structures; and
adjusting the angle of incidence of said at least two aerodynamic appendages as a function of the measured pressure; the adjusted deployed position allowing to generate vortex structures having an intensity and a trajectory which modify the local pressure field in order to interact with the vortex wake to attenuate it and separate the upsweep vortices from the longitudinal plane of the aircraft.

2. The device as claimed in claim 1, wherein each aerodynamic appendage in deployed position is oriented according to an angle of incidence 'α', the value of which is defined relative to the local flow lines (210) of the flow arriving on the aerodynamic appendage.

3. The device as claimed in claim 2, wherein the angle of incidence 'α' ranges between -20° and +30°.

4. The device as claimed in claim 2 or 3, comprising hydraulic or electrical or electrohydraulic or electromechanical means making it possible to vary the angle of incidence 'α' of the aerodynamic appendages in deployed position.

5. The device as claimed in any one of claims 1 to 4, comprising hydraulic or electrical or electrohydraulic or electromechanical means making it possible to switch the aerodynamic appendages from one position to another position.

6. The device as claimed in any one of claims 1 to 5, wherein the aerodynamic appendages are of substantially delta wing form, having two substantially right-angled (b, h) edges (202, 204), of which one constituting the base 'b' is placed adjacent to the surface of the aircraft, and of which the other constituting the height 'h' is at right angles to the surface of the aircraft when the appendage is in fully deployed position.

7. The device as claimed in claim 6, wherein the ratio 'b/h' between the base and the height of the two edges (202, 204) of the aerodynamic appendage is of the order of two.

8. The device as claimed in claim 6 or 7, wherein the height 'h' of an aerodynamic appendage lies within a range from approximately 50% to 120% of a predefined thickness 'δ' of the boundary layer.

9. The device as claimed in any one of claims 1 to 8, wherein the aerodynamic appendages are produced in a material similar to that of the fuselage of the aircraft.

10. The device as claimed in any one of claims 1 to 9, also comprising means for controlling the deployment of said at least two aerodynamic appendages and the orientation of each of said at least two appendages.

11. An aircraft (100) with a wing (108) having an afterbody (106) having an asymmetrical reduction of section of the rear fuselage (110), the aircraft comprising at least one device as claimed in any one of claims 1 to 10, positioned downstream of the wing of the aircraft symmetrically relative to the longitudinal plane of the aircraft.

12. The aircraft as claimed in claim 11, comprising at least one side door (102) and at least one device (402, 404) positioned in the vicinity and upstream of the side door.

13. The aircraft as claimed in claim 11 or 12, wherein said at least one device comprises a first aerodynamic appendage positioned at approximately 1/3 of the height of the fuselage and a second aerodynamic appendage positioned at approximately 2/3 of the height of the fuselage.

14. An aircraft (100) with a wing (108) having an afterbody (106) having an asymmetrical reduction of section upwards of the rear fuselage (110) and comprising at least one rear door and/or ramp (104) for air-dropping by rear door and/or ramp, the aircraft comprising at least one device as claimed in any one of claims 1 to 10, said at least one device being positioned on the rear fuselage along the afterbody, on each side of the aircraft along the rear door and/or ramp, on the fixed part of the fuselage, in an azimuthal position slightly upstream of the separating line of the flow.

15. The aircraft as claimed in claim 14, wherein said at least one device is composed of a plurality of aerodynamic appendages (502-i) substantially aligned in a longitudinal direction of the fuselage.

16. The aircraft as claimed in claim 15, wherein the aerodynamic appendages are regularly spaced.

17. A method for attenuating the vortex wake created by an aircraft with wings and having an afterbody having an asymmetrical reduction of section upwards of the rear fuselage, the aircraft comprising a vortex wake attenuation device as claimed in any one of claims 1 to 10, the method comprising the steps of:
deploying and orienting (602) said at least two aerodynamic appendages according to an angle of incidence having a predefined initial value;
measuring (604) the pressure in a zone of the aircraft representative of the presence of vortex structures; and
adjusting (610) the angle of incidence of the aerodynamic appendages as a function of the measured pressure.

18. The method as claimed in claim 17, wherein the step of adjustment of the angle of incidence consists in locking the aerodynamic appendages according to the incidence for which the measured pressure is maximized.

19. The method as claimed in claim 17, wherein the step of measuring the pressure consists in measuring the pressure on the upper surface of said appendages, and the step of adjustment of the angle of incidence comprises the steps (606, 608) of:
varying the angle of incidence of the aerodynamic appendages;
measuring the pressure on the upper surface for a given position of the aerodynamic appendages; and
locking the aerodynamic appendages according to the incidence for which the measured pressure is minimized.

20. A computer program product, said computer program comprising code instructions making it possible to perform the steps of the method as claimed in any one of claims 17 to 19, when said program is run on a computer.

21. An information storage means, removable or not, partially or totally readable by a computer or a microprocessor comprising code instructions of a computer program for the execution of each of the steps of the method as claimed in any one of claims 17 to 19.
